# EUROPÄISCHE PATENTSCHRIFT

(11) **EP 1 912 851 B1**
(45) Veröffentlichungstag und Bekanntmachung des Hinweises auf die Patenterteilung: **14.04.2010**
(21) Anmeldenummer: 06776616.2
(22) Anmeldetag: 04.08.2006
(51) Int. Cl.: B62D 25/20, B62D 21/15

(54) **KRAFTFAHRZEUG MIT EINER EINE BODENSTRUKTUR AUFWEISENDEN KAROSSERIE, UND WENIGSTENS EINEM VERSTEIFUNGSELEMENT ZUM VERSTEIFEN DER BODENSTRUKTUR**
MOTOR VEHICLE WITH A BODY HAVING A FLOOR STRUCTURE AND AT LEAST ONE REINFORCING ELEMENT FOR REINFORCING THE FLOOR STRUCTURE
VEHICULE A MOTEUR DOTE D'UNE CARROSSERIE PRESENTANT UNE STRUCTURE DE PLANCHER, ET D'AU MOINS UN ELEMENT DE RENFORCEMENT POUR LE RENFORT DE LADITE STRUCTURE DE PLANCHER

(30) Priorität: 05.08.2005 DE 102005036900
(43) Veröffentlichungstag der Anmeldung: 23.04.2008
(73) Patentinhaber: GM Global Technology Operations, Inc., Detroit, MI 48265-3000 (US)
(72) Erfinder: KLIMEK, Stanislaw, 60433 Frankfurt/Main (DE)
(74) Vertreter: Strauss, Peter
(86) Internationale Anmeldenummer: PCT/EP2006/007745
(87) Internationale Veröffentlichungsnummer: WO 2007/017198

(56) Entgegenhaltungen:
- EP-A- 0 255 749
- WO-A-01/45999
- DE-A1- 10 335 541
- DE-A1- 19 709 315
- GB-A- 2 089 464
- US-A1- 2004 104 602
- US-A1- 2005 046 236

## Beschreibung

Die Erfindung betrifft ein Kraftfahrzeug mit einer eine Bodenstruktur aufweisenden Karosserie, und wenigstens einem Versteifungselement zum Versteifen der Bodenstruktur nach Anspruch 1.

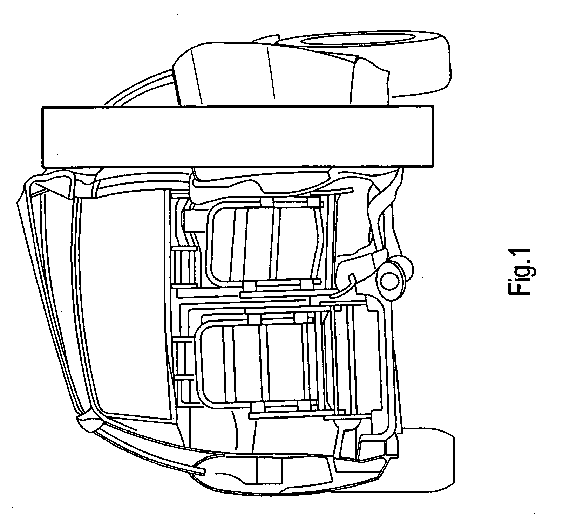

Gemäß gesetzlicher Anforderungen nach FMVSS214 - MY09 ergeben sich für den Side-Pole-Test (Seitenpfahltest) erheblich höhere strukturelle Anforderungen an Kraftfahrzeuge. Danach darf der Pfahl nicht mehr als 220 mm in die Fahrzeugstruktur eindringen. Ein derartiges Aufprallszenario ist in Figur 1 gezeigt.

Übliche Fahrzeugkonstruktionen weisen jedoch Eindringtiefen (Intrusionen) von 450 bis 500 mm nach diesem Test auf. Bodens-trukturen solcher Fahrzeuge bestehen aus zwei Querträgern, die unter den Vordersitzen eines Kraftfahrzeugs eingebaut sind.

Diese Querstruktur ist für die Erfüllung der zukünftigen Anforderungen im Side-Pole-Impact nicht geeignet. Die Struktur der Vordersitze wird wegen geringer zulässiger Intrusion wenig Einfluss auf die Gesamtquersteifigkeit haben. Das Versagen von einem der beiden Querträger führt zu großen lokalen Intrusionen, da die restliche Struktur kaum Quersteifigkeit aufweist.

Die Patentschrift DE 43 26 270 zeigt ein Kraftfahrzeug mit einer steifen Bodenstruktur, bei der mehrere energieabsorbierende Aufprallelemente über die Länge der Fahrgastzelle in den seitlichen Karosserieteilen integriert sind. Allerdings kann auch durch diese Maßnahme die gesetzlich vorgeschriebene Intrusion nicht sicher erreicht werden, da die Wirkung der Aufprallelemente eine jeweils noch intakte Bodenstruktur voraussetzt. Versagt diese bei Seitenaufprall vorzeitig, finden die Aufprallelemente keine Abstützung mehr gegen den Innenraum mit der Folge des zu weiten Eindringens des Pfahls.

EP 0 255 749 A1 zeigt ein Gattungsgemäßes Kraftfahrzeug mit einer Sandwichbodenstruktur, die wellenförmige Bleche aufweist, deren Wellen quer zur Fahrtrichtung verlaufen. Der Sandwichboden erstreckt sich jeweils vom Seitenschweller bis zu einem Mitteltunnel, der zur Aufnahme eines Antriebsstranges dient.

US 2005/046236 A1 offenbart eine Fahrzeugkarosserie mit einer Bodenstruktur, welche schräg zur Fahrtrichtung verlaufende Wellen aufweist.

GB 2 089 464 A offenbart ein Kraftfahrzeug mit einer Bodenstruktur, welche quer zur Fahrtrichtung verlaufende Wellen aufweist.

Es ist Aufgabe der vorliegenden Erfindung, ein Fahrzeug mit einer steifen Bodenstruktur bereitzustellen, die erhöhten Widerstand gegen seitlich einwirkende Pfahlkräfte bietet, die keine wesentliche Gewichtserhöhung des Fahrzeugs nach sich zieht und die einfach und kostengünstig zu realisieren ist.

Diese Aufgabe wird durch ein Fahrzeug mit einem Versteifungselement gelöst, das wellenförmig ausgebildet ist, wobei die Wellen quer zur Fahrzeuglängsachse verlaufen.

Ein wesentlicher Punkt besteht dabei darin, dass eine solche Struktur in seitlicher Richtung besonders hohe Schubfestigkeit und Biegesteifigkeit aufweist, und zudem z.B. durch Kaltpressen leicht herstellbar ist. Die Höhe der 'Wellen' ist dabei so gestaltet, dass weder die Fußfreiheit noch der für den Einbau der Lüftungskanäle erforderliche Bauraum tangiert wird.

Zur besseren Ableitung der eingeleiteten Lasten bei einem Kraftfahrzeug, bei dem die Bodenstruktur einen in Fahrzeuglängsrichtung verlaufenden Fahrzeugtunnel sowie beidseitig am Fahrzeug ausgebildete Längsträger umfasst, erstrecken sich die Versteifungselemente in einem Lastpfad zwischen einem jeweiligen seitlichen Träger und dem Tunnel. Damit wird ein durchgängiger Lastpfad zwischen Trägern und Tunnel gebildet, über dessen Länge hinweg die eingeleiteten Lasten abgebaut werden können. Die Deformationszonen (und damit Energieabbauzonen) liegen dabei im Bereich der Träger und des Tunnels, während die Versteifungselemente zum Schutz der Insassen ihre Form im Wesentlichen behalten.

Ein Vorteil entsteht dadurch, dass in dem Tunnel ein Auspuff zum Aufnehmen von Deformationsenergie geführt ist. Der Auspuff nimmt dabei zumindest einen Teil der über den Lastpfad Längsträger - Versteifungselement - Tunnel eingeleiteten Aufpralllasten auf, indem er sich unter diesen Lasten verformt.

Um dabei zu verhindern, dass der Auspuff bei einem Seitenaufprall aus dem Lastpfad gedrückt wird, ist es von Vorteil, wenn eine Tunnelspange vorgesehen ist, die sich an den Schenkeln des nach unten offenen Tunnels so abstützt, dass sie den Auspuff bei Deformation des Tunnels nach oben drückt. Damit wird selbst bei großen Deformationskräften ein zuverlässiger Abbau der eingeleiteten Energie sichergestellt.

Vorteilhafte Weiterbildungen des Fahrzeugs mit der besagten Bodenstruktur sind in den folgenden Unteransprüchen 2 bis 14 angegeben.

In einer vorteilhaften Ausgestaltung der Karosserie des Fahrzeugs können die Versteifungselemente einstückig mit der Bodenstruktur ausgebildet sind. Eine solche Versteifung ist presstechnisch besonders einfach zu realisieren und zudem kostengünstig, da zusätzliche Montagevorgänge und Kosten für weitere Teile entfallen.

In einer alternativen Weiterbildung der Karosserie des Fahrzeugs können die Versteifungselemente auch fahrzeuginnenseitig an einem Karosserieboden angeordnet sein. Dadurch wird die Versteifung von der Dicke der Bodenstruktur unabhängig und kann zB stärker als diese ausgeführt werden. Grundsätzlich ist es auch möglich, die Versteifungselemente fahrzeugaußenseitig an dem Karosserieboden anzubringen, wodurch allerdings Verkleidungsprobleme am Unterboden entstehen können. Gleichzeitig entfallen Gestaltungsmöglichkeiten des Innenraums unter Nutzung der Versteifungselemente, wie im Folgenden zu zeigen sein wird.

Vorzugsweise werden danach die Versteifungselemente im Sitzbereich, insbesondere im Bereich der Vordersitze angeordnet. Die üblicherweise vorgesehenen beiden Querträger unter dem Vordersitz werden dabei durch eine entsprechende Sandwich-Konstruktion ersetzt. Damit werden die besonders gefährdeten Sitzpositionen des Fahrers und Beifahrers gezielt gegen einen Seitenaufprall geschützt, und an anderen Positionen Gewicht eingespart.

Zum besseren Ableiten der eingeleiteten Lasten in die Fahrzeugstruktur sind die Versteifungselemente bevorzugt mit einem darunter verlaufenden Karosserieboden verbunden. Eine Verbindung kann abhängig vom Material der Elemente durch Kleben, Schweißen, Schrauben, Vernieten oÄ hergestellt werden. Für die Elemente kommt jedes geeignete energieabsorbierende Material in Frage, insbesondere Aluminiumblech, Stahlblech oder (gewebeverstärkter) Kunststoff. Grundsätzlich ist aber auch eine Ausprägung der Elemente direkt am Karosserieboden selbst denkbar, zB als wellenförmige Struktur des Bodenblechs.

Obwohl die Wellen ein beliebiges, geeignetes Querschnittsprofil aufweisen können ist ein im Querschnitt kastenförmiges Profil bevorzugt. Dadurch ergibt sich eine ebene obere und untere Montagefläche zB für einen Sitz oÄ.

Über eine solche Fläche hinweg können an einem Versteifungselement im Wesentlichen quer zur Erstreckungsrichtung der Wellen verlaufende Verstärkungen angebracht sein. Dadurch wird eine Verformung des Versteifungselements durch Biegebeanspruchungen, die beim Eindringen des Pfahls auftreten, verhindert. In der Folge bleibt die Aufnahmefähigkeit des Versteifungselements für Schubbelastungen erhalten. Die Verstärkungen können dabei als Sitzstützen ausgebildet sein, auf der die Laufschienen der Sitze montiert werden.

Eine Weiterbildung dieser Anordnung sieht vor, dass die Versteifungselemente einerseits an dem Tunnel und andererseits/oder dem seitlichen Träger befestigt sind. Damit wird ein 'Ausbrechen' der Elemente aus dem Lastpfad sicher verhindert.

Eine besonders formstabile Verbindung entsteht dann, wenn Befestigungselemente vorgesehen sind, deren Profil dem wellenförmigen Querschnittsprofil der Versteifungselemente zur gleichmäßigen Übertragung der eingeleiteten Lasten folgt und mit diesem kraftschlüssig verbunden ist. Lastspitzen bei Kraftübertragung in die Elemente und von diesen wiederum in den Tunnel werden damit ausgeschlossen.

Zur weiteren Erhöhung der Steifigkeit gegen seitlichen Lasteintrag können sowohl die Träger als auch der Tunnel zusätzlich gegen einen Seitenaufprall versteift sein. Dadurch werden die Versteifungselemente entlastet und die Insassen noch besser geschützt.

Die Steifigkeit der Bodenstruktur kann zusätzlich erhöht werden, indem beidseitig am Fahrzeug ausgebildeten Schweller gegen einen Seitenaufprall versteift sind.

Die Erfindung wird im Folgenden anhand eines Ausführungsbeispiels unter Bezugnahme auf die zugehörigen Zeichnungen näher erläutert. Gleiche oder gleichwirkende Teile sind mit gleichen Bezugsziffern versehen. Es zeigen:
- Figur 1: ein übliches Fahrzeug in Querschnittsansicht, dass einem Side-Pole-Test unterzogen wurde;
- Figur 2a: ein erfindungsgemäßes Fahrzeug in Querschnittsansicht mit einer steifen Bodenstruktur, deren Aufbau unter einem Sitz noch einmal in Seitenansicht dargestellt ist;
- Figur 2b: die Bodenstruktur des Fahrzeugs der Figur 2a in schematischer Querschnittsansicht zum Verdeutlichen der Position und Wirkungsweise des Versteifungselements im Lastpfad;
- Figur 2c: einen vergrößerten Ausschnitt der Bodenstruktur des Fahrzeugs der Figur 2a mit dem Versteifungselement in der oberen Ansicht, das noch einmal im Schnitt A - A in der unteren Ansicht gezeigt ist, und
- Figur 2d: das erfindungsgemäße Fahrzeug der Figur 2a mit der Bodenstruktur vor und nach dem Test, sowie die Verschiebungen der Positionen A - D entlang der B-Säule über der Aufprallzeit in Diagrammform.

Die Figur 1 zeigt ein übliches Fahrzeug in Querschnittsansicht, dass einem Side-Pole-Test unterzogen wurde. Der Pfahl deformiert dabei das Fahrzeug im Aufprallbereich und drückt die Karosserie bis in den (Beifahrer)Sitzbereich.

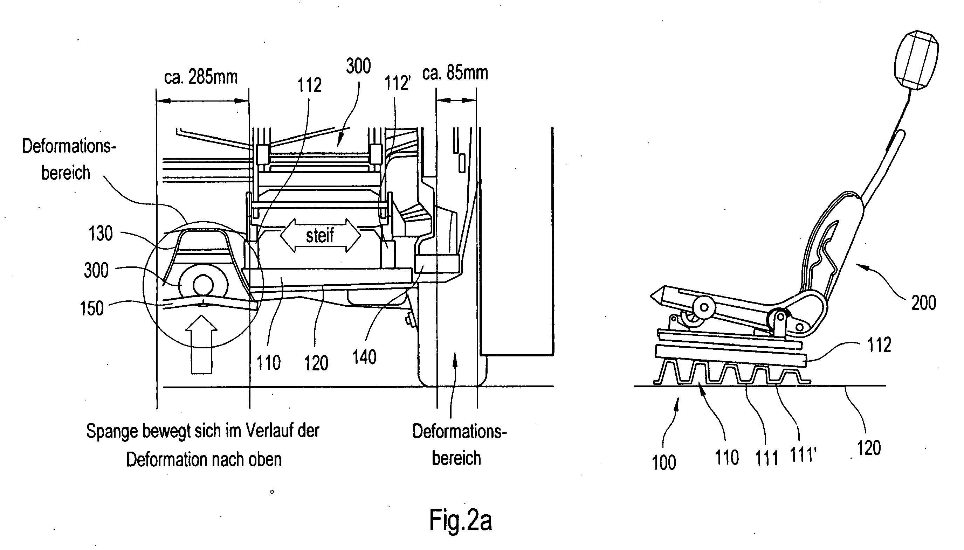

Die Figur 2a zeigt ein erfindungsgemäßes Fahrzeug mit einer Bodenstruktur 100, deren Aufbau unter einem Sitz 200 noch einmal in Seitenansicht dargestellt ist. Der Sitz 200 kann dabei ein Vordersitz, Rücksitz oÄ sein. Ein Versteifungselement 110 mit quer zur Fahrzeuglängsrichtung verlaufenden Wellen 111, 111' weist hier ein kastenförmiges Profil auf, womit eine ebene Oberfläche zur Montage von Verstärkungen 112, 112' erzeugt wird. Diese Verstärkungen 112, 112' verlaufen quer zur Erstreckungsrichtung der Wellen 111, 111' und verleihen dem Versteifungselement 110 damit eine zusätzliche Biegesteifigkeit um eine in diese Richtung verlaufende Torsionsachse. Dadurch kann das Versteifungselement 110 unter der Last des Aufpralls nicht oder nur schwer nach oben oder unten ausweichen, womit seine Ausrichtung gegen den seitlich eindringenden Pfahl und damit seine Aufnahmefähigkeit für Schubkräfte in Erstreckungsrichtung der Wellen 1.11, 111' sowie für Biegemomente um eine Torsionsachse quer zur Erstreckungsrichtung der Wellen 111, 111' erhalten bleibt. Die sich aus der wellenförmigen Ausprägung ergebenden Lastaufnahmefähigkeiten des Versteifungselements 110 bleiben damit erhalten. Gleichzeitig kann durch entsprechende Wahl der Höhe der Verstärkungen 112, 112' für ausreichende Fußfreiheit im Fond des Fahrzeugs gesorgt werden. Auf diesen Verstärkungen 112, 112' sind die Laufschienen des Sitzes 200 montiert. Das Versteifungselement 110 kann dabei zur weiteren Erhöhung der Formstabilität mit einem Karosserieboden 120 verbunden (verklebt, verschraubt, vernietet oÄ) sein.

Der zum Übertragen und Abbauen der Pfahlkräfte vorgesehene Lastpfad ergibt sich aus der Anordnung eines Längsträgers 140 und eines Fahrzeugtunnels 130, und dem dazwischen angeordneten Versteifungselement 110. Die Deformationsbereiche beim Side-Pole-Test werden durch das Versteifungselement 110 in einen Außenbereich (85 mm Breite) und in einen Mittenbereich (285 mm Breite) verschoben, womit die Sitzposition nicht in Mitleidenschaft gezogen wird. Das bedeutet, dass der Energieabbau im Wesentlichen im Bereich des Trägers 140 und im Bereich des Tunnels 130 stattfindet, während das dazwischenliegende Versteifungselement 110 praktisch unbeschädigt bleibt.

In dem Tunnel 130 ist dabei ein Auspuff 300 geführt, der zur Aufnahme von Deformationsenergie genutzt wird, dh bei einem Seitenaufprall zusammengedrückt werden kann. Um zu verhindern, dass sich der Auspuff bei einem Seitenaufprall aus dem Lastpfad bewegt, ist eine gewölbte Tunnelspange 150 vorgesehen, die sich beidseitig an den Schenkeln des Tunnels 130 abstützt. Bei einem Seitenaufprall verschiebt sich das Versteifungselement 110 nach links in Richtung Tunnel 130. Dieser wird dadurch deformiert, dh seitlich eindrückt und damit in der Höhe verkürzt. Die Spange 150 wandert so nach oben und verhindert, dass der Auspuff 300 nach unten - und damit aus dem Lastpfad - gedrängt wird.

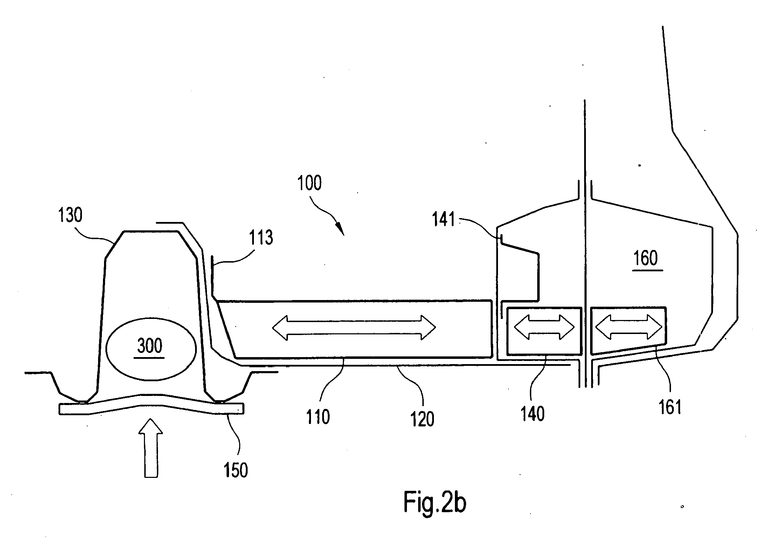

Die Figur 2b zeigt die Bodenstruktur 100 des Fahrzeugs der Figur 2a in schematischer Querschnittsansicht zum Verdeutlichen der Position und Wirkungsweise des Versteifungselements 110 im bezeichneten Lastpfad. Das Versteifungselement 110 ist mit dem Karosserieboden 120 verbunden, im Lastpfad zwischen dem Längsträger 140 und dem Fahrzeugtunnel 130 angeordnet und mit diesem zusätzlich über ein Befestigungselement 113 verbunden. Dieses Befestigungselement 113 ist optional und kann zwischen Tunnel 130 und Versteifungselement 110 und/oder zwischen Träger 140 (am Karosserieboden seitlich) und Versteifungselement 110 konstruiert werden. In dem Tunnel 130 ist der Auspuff 300 geführt und wird bei einem Seitenaufprall über eine am Tunnel 130 angebrachte Spange 150 wie beschrieben nach oben gedrückt und im Lastpfad Träger 140, Versteifungselement 110 und Tunnel 130 gehalten. Da das Versteifungselement 110 eine erhebliche Steifigkeit aufweist, finden damit die Deformationen - und damit der Lastabbau - im Bereich des Tunnels 130 und des Trägers 140 statt. Im Bereich des Tunnels 130 geschieht der Lastabbau zusätzlich über das Zusammendrücken des Auspuffs 300. Der über dem Versteifungselement 110 angeordnete Sitz 200 wird damit praktisch nicht in Mitleidenschaft gezogen. Bei dieser Ausführungsform sind sowohl am Längsträger 140 wie in einem Schweller 160 des Fahrzeugs zusätzliche Verstärkungen 141 und 161 vorgesehen. Die Verstärkung 141 des Trägers 140 ist als zur Fahrzeugseite hin geschlossenes U-Profil ausgelegt, die insbesondere die in Figur 2b gezeigte wellenförmige Grundstruktur des Trägers 140 gegen Biegung schützt. Die Verstärkung 161 des Schwellers ist als kastenförmiges Profil ausgelegt, das diese Wirkung zusätzlich unerstützt.

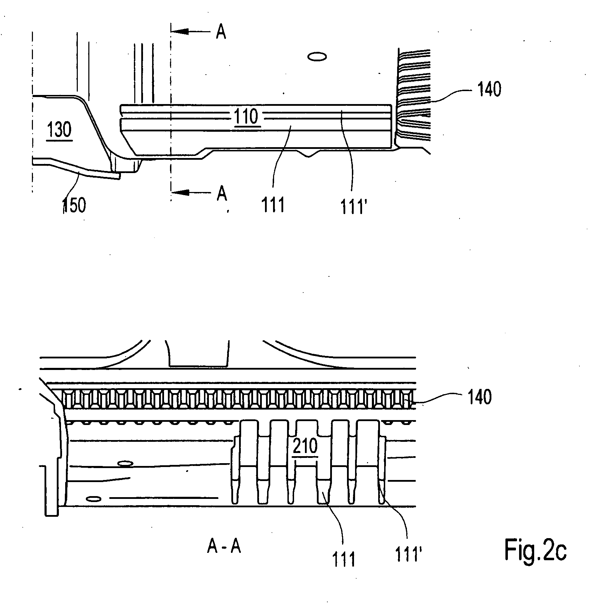

Die Figur 2c zeigt einen vergrößerten Ausschnitt der Bodenstruktur 100 des Fahrzeugs der Figur 2a mit dem Versteifungselement 110 in der oberen Ansicht, das noch einmal im Schnitt A - A in der unteren Ansicht gezeigt ist. Dabei sind die Wellen 111, 111' des Versteifungselements 110 zwischen Tunnel 130 und Längsträger 140 deutlich sichtbar. Der Träger 140 weist dabei ebenfalls eine wellenförmige Grundstruktur auf. Durch die wellenförmige Struktur des Versteifungselements 110 wird eine Steifigkeit der Bodenstruktur 100 erzielt, die dem eindringenden Pfahl einen erheblichen Widerstand entgegensetzt. Die eingeleiteten Lasten werden im Wesentlichen im Bereich des Trägers 140 und des Tunnels 130 abgebaut.

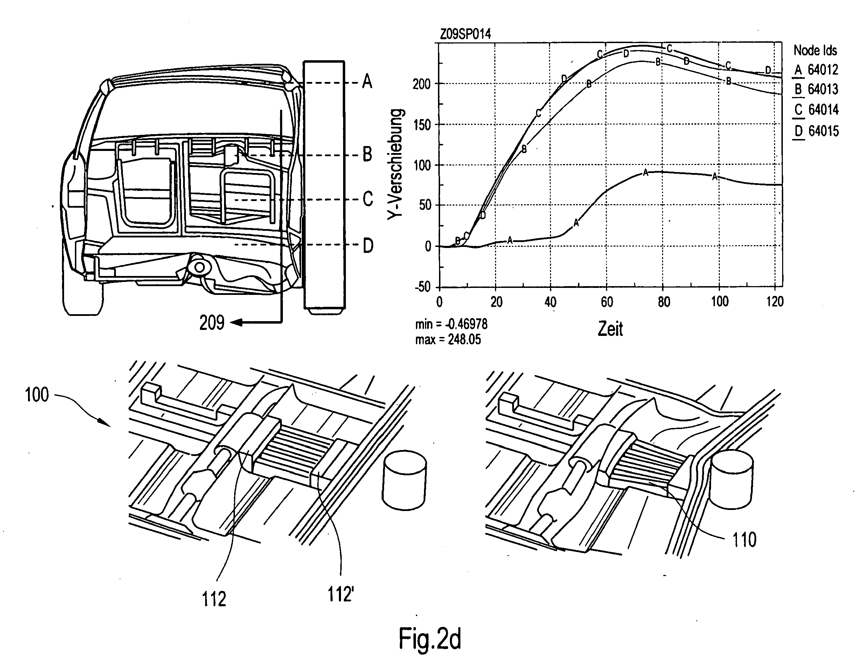

Die Figur 2d zeigt das erfindungsgemäße Fahrzeug der Figur 2a mit der Bodenstruktur 100 vor und nach dem Test, sowie die Verschiebungen der Positionen A - D entlang der B-Säule über der Aufprallzeit in Diagrammform. Die Intrusion der Karosseriewand beträgt dabei nur 209 mm, wobei die eingeleitete Energie im Längsträger- und Tunnelbereich des Fahrzeugs abgebaut wird, wie an der geringen Verformung des Versteifungselements 110 und dem Verlauf der oberen Kurven im Diagramm festzustellen ist. Weder die Maximalwerte der D-Position noch die der anderen Positionen liegen im Wertebereich der Bodenstruktur eines bekannten Fahrzeugs.

Insgesamt entsteht dadurch eine hohe Quersteifigkeit der Struktur bei relativ geringem Gewicht. Durch die Maßnahmen werden die maximalen Intrusionen beim Side-Pole-Test erheblich reduziert und liegen damit im zulässigen Bereich gemäß FMVSS214 - MY09. Bei einer lokalen Überlastung der Bodenstruktur 100 übernehmen die benachbarten Wellen 111, 111' die Last und vermeiden so zu große Deformationen. Die Übertragung der Pfahlkräfte auf die Struktur 100 über Schweller 160 und Versteifungselement 110 sowie Karosserieboden 120 bis zum Tunnel 130 und zum Auspuff 300 erfolgt auf relativ großer Breite. Der Energieabbau verläuft daher mit höherer Effizienz als bisher üblich. Diese Art der Konstruktion erfüllt damit die gesetzlichen Anforderungen nach dem Side-Pole-Test.

### Bezugszeichenliste

- 100: Bodenstruktur
- 110: Versteifungselement
- 111, 111': Welle
- 112, 112': Verstärkung Versteifungselement
- 113: Befestigungselement
- 120: Karosserieboden
- 130: Fahrzeugtunnel
- 140: Längsträger
- 141: Verstärkung Längsträger
- 150: Tunnelspange
- 160: Fahrzeugschweller
- 161: Verstärkung Schweller
- 200: Vordersitz
- 300: Auspuff

## Patentansprüche

1. Kraftfahrzeug mit einer eine Bodenstruktur (100) aufweisenden Karosserie, und wenigstens einem Versteifungselement (110) zum Versteifen der Bodenstruktur (100), wobei das Versteifungselement (110) wellenförmig ausgebildet ist, wobei die Wellen (111, 111') quer zur Fahrzeuglängsachse verlaufen, wobei die Bodenstruktur (100) einen in Fahrzeuglängsrichtung verlaufenden Fahrzeugtunnel (130) sowie beidseitig am Fahrzeug ausgebildete Längsträger (140) umfasst, und sich die Versteifungselemente (110) in einem Lastpfad zwischen einem jeweiligen seitlichen Träger (140) und dem Tunnel (130) erstrecken, **dadurch gekennzeichnet, dass** in dem Tunnel (130) ein Auspuff (300) zum Aufnehmen von Deformationsenergie bei einem Seitenaufprall geführt ist, und dass eine Tunnelspange (150) vorgesehen ist, die sich an den Schenkeln des nach unten offenen Tunnels (130) so abstützt, dass sie den Auspuff (300) bei Deformation des Tunnels (130) bei einem Seitenaufprall nach oben drückt.

2. Kraftfahrzeug nach Anspruch 1, bei dem die Versteifungselemente (110) einstückig mit der Bodenstruktur ausgebildet sind.

3. Kraftfahrzeug nach Anspruch 1, bei dem die Versteifungselemente (110) fahrzeuginnenseitig an einem Karosserieboden (120) angeordnet sind.

4. Kraftfahrzeug nach Anspruch 2, bei dem die Versteifungselemente (110) mit dem Karosserieboden (120) verbunden sind.

5. Kraftfahrzeug nach einem der vorstehenden Ansprüche, bei dem die Versteifungselemente (110) im Sitzbereich, insbesondere im Bereich der Vordersitze (200), angeordnet sind.

6. Kraftfahrzeug nach einem der vorstehenden Ansprüche, bei dem die Wellen (111, 111') ein im Querschnitt kastenförmiges Profil aufweisen.

7. Kraftfahrzeug nach einem der vorstehenden Ansprüche, bei dem die Versteifungselemente (110) im Wesentlichen quer zur Erstreckungsrichtung der Wellen (111, 111') verlaufende Verstärkungen (112, 112') aufweisen.

8. Kraftfahrzeug nach einem der Ansprüche 1 bis 7, bei dem die Versteifungselemente (110) einerseits an dem Tunnel (130) und andererseits/oder an dem seitlichen Längsträger (140) befestigt sind.

9. Kraftfahrzeug nach Anspruch 8, bei dem Befestigungselemente (113) vorgesehen sind, deren Profil dem wellenförmigen Querschnittsprofil der Versteifungselemente (110) zur gleichmäßigen Übertragung der eingeleiteten Lasten folgt und mit diesem kraftschlüssig verbunden ist.

10. Kraftfahrzeug nach einem der vorangegangenen Ansprüche, bei dem die seitlichen Längsträger (140) und/oder der Fahrzeugtunnel (130) gegen einen Seitenaufprall verstärkt sind.

11. Kraftfahrzeug nach einem der vorstehenden Ansprüche, bei dem die Bodenstruktur (100) beidseitig am Fahrzeug ausgebildete Fahrzeugschweller (160) umfasst, die gegen einen Seitenaufprall verstärkt sind.

## Claims

1. A motor vehicle with a body having a floor structure (100) and at least one stiffening element (110) for stiffening the floor structure (100), with the stiffening element (110) being arranged in a wave-like manner, with the waves (111, 111') extending transversely to the longitudinal axis of the vehicle, with the floor structure (100) comprising a vehicle tunnel (130) extending in the longitudinal direction of the vehicle and longitudinal beams (140) arranged on both sides of the vehicle, and the stiffening elements (110) extend in a load path between a respective lateral support (140) and the tunnel (130), **characterized in that** an exhaust (300) for absorbing deformation energy during a side impact is guided in the tunnel (130), and a tunnel bracket (150) is provided which rests on the legs of the downwardly open tunnel (130) in such a way that it presses the exhaust (300) upwardly during deformation of the tunnel (130) during a side impact.

2. A motor vehicle according to claim 1, wherein the stiffening elements (110) are arranged integrally with the floor structure.

3. A motor vehicle according to claim 1, wherein the stiffening elements (110) are arranged on the inside of the vehicle on a floor (120) of the body.

4. A motor vehicle according to claim 2, wherein the stiffening elements (110) are connected with the floor (120) of the body.

5. A motor vehicle according to one of the preceding claims, wherein the stiffening elements (110) are arranged in the seating area, especially in the area of the front seats (200).

6. A motor vehicle according to one of the preceding claims, wherein the waves (111, 111') have a profile which is box-like in the cross section.

7. A motor vehicle according to one of the preceding claims, wherein the stiffening elements (110) comprise reinforcements (112, 112') which extend transversely to the direction of extension of the waves (111, 111').

8. A motor vehicle according to one of the claims 1 to 7, wherein the stiffening elements (110) are fastened on the one hand to the tunnel (130) and on the other hand/or to the lateral longitudinal beams (140).

9. A motor vehicle according to claim 8, wherein fastening elements (113) are provided whose profile follows the wave-like cross-sectional profile of the stiffening elements (110) for evenly transmitting the introduced loads and is connected with the same in a non-positive way.

10. A motor vehicle according to one of the preceding claims, wherein the lateral longitudinal beams (140) and/or the vehicle tunnel (130) are reinforced against a side impact.

11. A motor vehicle according to one of the preceding claims, wherein the floor structure (100) comprises vehicle sills (160) which are arranged on both sides of the vehicle and which are reinforced against a side impact.

## Revendications

1. Véhicule à moteur avec une carrosserie comportant une structure de plancher (100) et au moins un élément raidisseur (110) destiné à raidir la structure de plancher (100), dans lequel l'élément raidisseur (110) est ondulé, les ondulations (111, 111') étant perpendiculaires à l'axe longitudinal du véhicule, la structure de plancher (100) comprenant un tunnel (130) orienté dans le sens longitudinal du véhicule et des longerons (140) formés des deux côtés sur le véhicule, et les éléments raidisseurs (110) s'étendant dans un trajet de charge entre un support latéral (140) correspondant et le tunnel (130), **caractérisé en ce qu'**il est prévu guidé dans le tunnel (130) un échappement (300) destiné à absorber l'énergie de déformation en cas de collision latérale et **en ce qu'**il est prévu un étai de tunnel (150) qui s'appuie sur les bras du tunnel (130) ouvert vers le bas de telle façon qu'il pousse l'échappement (300) vers le haut en cas de déformation du tunnel lors d'une collision latérale.

2. Véhicule à moteur selon la revendication 1, dans lequel les éléments raidisseurs (110) sont formés d'un seul tenant avec la structure de plancher.

3. Véhicule à moteur selon la revendication 1, dans lequel les éléments raidisseurs (110) sont disposés à l'intérieur du véhicule sur un plancher de carrosserie (120).

4. Véhicule à moteur selon la revendication 2, dans lequel les éléments raidisseurs (110) sont reliés au plancher de carrosserie (120).

5. Véhicule à moteur selon l'une des revendications précédentes, dans lequel les éléments raidisseurs (110) sont disposés au niveau des sièges, en particulier au niveau des sièges avant (200).

6. Véhicule à moteur selon l'une des revendications précédentes, dans lequel les ondulations (111, 111') présentent un profil en caissons en section.

7. Véhicule à moteur selon l'une des revendications précédentes, dans lequel les éléments raidisseurs (110) présentent des renforts (112, 112') disposés de façon sensiblement perpendiculaire au sens d'extension des ondulations (111, 111').

8. Véhicule à moteur selon l'une des revendications 1 à 7, dans lequel les éléments raidisseurs (110) sont fixés d'une part au tunnel (130) et d'autre part/ou sur le longeron latéral (140).

9. Véhicule à moteur selon la revendication 8, dans lequel sont prévus des éléments de fixation (113) dont le profil suit le profil en section ondulé des éléments raidisseurs (110) pour une transmission homogène des charges appliquées et qui est relié avec ceux-ci par adhérence.

10. Véhicule à moteur selon l'une des revendications précédentes, dans lequel les longerons latéraux (140) et/ou le tunnel (130) sont renforcés en prévision d'une collision latérale.

11. Véhicule à moteur selon l'une des revendications précédentes, dans lequel la structure de plancher (100) comprend des seuils de véhicule (160) formés des deux côtés sur le véhicule, qui sont renforcés en prévision d'une collision latérale.
